Europäisches Patentamt

European Patent Office

Office européen des brevets

(11) Veröffentlichungsnummer: **0 422 627 A1**

## EUROPÄISCHE PATENTANMELDUNG

(21) Anmeldenummer: **90119458.9**

(22) Anmeldetag: **11.10.90**

(51) Int. Cl.⁵: **A23N 7/02**

(30) Priorität: **13.10.89 DE 3934173**

(43) Veröffentlichungstag der Anmeldung:
**17.04.91 Patentblatt 91/16**

(84) Benannte Vertragsstaaten:
**DE NL**

(71) Anmelder: **Dornow, Karl Dietrich
Kaiser-Friedrich-Ring 96
W-4000 Düsseldorf 11(DE)**

(72) Erfinder: **Dornow, Karl Dietrich
Kaiser-Friedrich-Ring 96
W-4000 Düsseldorf 11(DE)**

(74) Vertreter: **Bergen, Klaus, Dipl.-Ing. et al
Patentanwälte Dr.-Ing. Reimar König
Dipl.-Ing. Klaus Bergen Wilhelm-Tell-Strasse
14 Postfach 260162
W-4000 Düsseldorf 1(DE)**

(54) **Rollen- oder Walzenschälmaschine zum mechanischen Schälen von Erd- oder Baumfrüchten.**

(57) Eine Rollen- oder Walzenschälmaschine (1) zum mechanischen Schälen von Erd- oder Baumfrüchten mit mindestens einer angetriebenen Schälwalze (3 bis 6), bei der die Schälwalzen einzeln oder gruppenweise quer zu ihren Längsachsen (36) in eine Schräglage (37) verschwenkbar sind, ermöglicht mit einem geringen maschinentechnischen Aufwand und ohne Nachteile in der Schälqualität variable Betriebsbedingungen.

Fig. 3

# ROLLEN- ODER WALZENSCHÄLMASCHINE ZUM MECHANISCHEN SCHÄLEN VON ERD- ODER BAUM-FRÜCHTEN

Die Erfindung betrifft eine Rollen- oder Walzenschälmaschine, zum mechanischen Schälen von Erd- oder Baumfrüchten mit mindestens einer angetriebenen Schälwalze.

Eine Schälmaschine dieser Art mit zwei oder mehreren Schälwalzen ist aus der DE-OS 25 47 863 bekannt. Die Schälwalzen sind dort gegenläufig angetrieben und ihre Außenmäntel weisen einen rauhen Belag auf, wie Schmirgel oder Karborund. Zum kontinuierlichen Betrieb der Schälmaschine wird das Schälgut an einem Ende der Schälwalzen mittels einer Rutsche aufgegeben, und das schon auf den Schälwalzen befindliche Schälgut wird durch die nachrutschenden Erd- oder Baumfrüchte, wie Kartoffeln, Möhren, Zwiebeln, Sellerie und Rote Beete, zum anderen Ende, dem Auslaufende, hin befördert und dort in einem Auffangbehälter gesammelt. Während des Transportes werden die Schalen des zu schälenden Gutes durch die Drehbewegung der aufgerauhte Oberflächen aufweisenden Schälwalzen abgerieben.

Um den Transport des Schälgutes vom Aufgabeende zum Auslaufende der Schälwalzen zu unterstützen, sind die Mäntel der Schälwalzen mit stollenartigen Erhebungen versehen, die längs einer Schraubenlinie über den Mantel der Schälwalzen verteilt sind.

Durch die deutsche Patentschrift 35 02 845 ist es zum Transport des Schälgutes bekanntgeworden, in der Rollen-oder Walzenschälmaschine zumindest eine unabhängig von den Schälwalzen antreibbare Förderschnecke anzuordnen. Beim Schälen wird diesen bekannten Rollenschälmaschinen über eine Leitung ständig von oben Frischwasser zugeführt. Das Frischwasser wäscht den Abfall sofort weg und verläßt -durch den Schälabfall angereichert - als Abfallwasser die Maschine. Um gewünscht gute Schälergebnisse bei hoher Durchsatzleistung und geringstmöglichem Schälabfall zu erreichen, wird dort der Schälprozeß in Abhängigkeit vom anfallenden Abfall zur Erzielung eines verringerten Abfalls durch Verändern der von außerhalb der Maschine beeinflussbaren Hauptbetriebsgrößen, wie Einfüllmenge, Förder- und Schälwalzengeschwindigkeit eingestellt. Dabei ist es somit erforderlich, ein stetiges wechselseitiges Abgleichen der Betriebsgrößen vorzunehmen.

Der Erfindung liegt die Aufgabe zugrunde, eine gattungsgemäße Rollen- oder Walzenschälmaschine so weiterzubilden, daß mit einem geringen maschinentechnischen Aufwand und ohne Nachteile in der Schälqualität variable Betriebsbedingungen möglich sind.

Diese Aufgabe wird erfindungsgemäß dadurch gelöst, daß die Schälwalzen, von denen vorzugsweise vier eine Walzengruppe bilden können, einzeln oder gruppenweise quer zu ihren Längsachsen in eine Schräglage verschwenkbar sind. Unter querverschwenkbar wird hierbei jede Art von Scwenkbewegung verstanden, die - unter Verlagerung der vorteilhaft nebeneinanderliegend auf einer Geraden angeordneten Walzen - in eine geänderten Relativlage der Drehachsen zueinander führt und einen veränderten Böschungswinkel bewirkt.

Vorteilhaft läßt sich die Walzengruppe in eine Schräglage verschwenken, beispielsweise aus einer Ausgangslage, in der die Walzen horizontal nebeneinander liegen. Aufgrund der erfindungsgemäß einzustellenden Schräglage reicht für den Schälbetrieb eine Walzengruppe mit vier Walzen aus. Die Schräglage der Walzen erlaubt es, die Betriebsbedingungen, insbesondere die für die Schälqualität- und die jeweiligen Schäl-Anforderungen wesentliche Verweilzeit in der Schälmaschine bzw. auf den Schälwalzen, variabel an das jeweilige Schälgut anzupassen. Die vorzugsweise gleichsinnig umlaufenden Walzen, bei denen in Drehrichtung die Umfangsgeschwindigkeit von Schälwalze zu Schälwalze um 2 bis 50 Umdrehungen zunehmen kann, und deren Kerndurchmesser, d.h. der Durchmesser ohne Karborundschicht und/oder Profilen, nicht mehr als 160 mm Durchmesser zu betragen braucht, werden nämlich das Schälgut in Drehrichtung der Schälwalzen anhäufen; aufgrund der Schrägverstellbarkeit der mehrere Walzen umfassenden Walzengruppe fällt bzw. rollt das Schälgut allerdings entgegen der Drehrichtung zurück und verteilt sich somit gleichmäßig auf alle Walzen. Der sich unmittelbar auf den Böschungswinkel auswirkende Schräglagenwinkel läßt sich beispielsweise abhängig von der Rauhigkeit der Oberfläche und Kontur - eher sphärisches Schälgut wie Kartoffeln rollt bei einem geringeren Schräglagenwinkel ab, als beispielsweise Karotten - sowie Größe des Schälgutes entsprechend einstellen.

Gemäß der Erfindung können die Schälwalzen derart auf einer Bogenlinie angeordnet sein, daß sie in ihrer Ausgangsstellung nicht horizontal und nicht auf einer Geraden nebeneinander, sondern beispielsweise auf einem Viertelkreisbogen angeordnet sind.

Bei Umfangsgeschwindigkeiten der Schälwalzen, die Schalenreste von den Walzenoberflächen abschleudernde zentrifugalkräfte bewirken, wird kein oder allenfalls nur eine geringe Menge Frischwasser benötigt; denn einer Reinigung der Poren des Karborundbelages der Schälwalzen bedarf es nicht, da der Schälabfall aufgrund der erreichten Zentrifugalkräfte keine Gelegenheit hat, sich an bzw. in den Poren der Oberfläche der Schälwalzen festzusetzen.

Bei Schälwalzen mit einem in Längsrichtung einstellbaren Neigungswinkel bewirken zum Auslaufende der Rollenschälmaschine hin geneigte Schälwalzen entsprechend dem Neigungswinkel Änderungen der Transportgeschwindigkeit des aufgegebenen Schälgutes. Wird eine kürzere Verweil- und damit Schälzeit des Aufgabegutes gewünscht, braucht lediglich ein größerer Neigungswinkel eingestellt zu werden. Der Transport des Aufgabeguts über die Schälwalzen bzw. durch die Maschine läßt sich durch Vorhänge unterstützen, die an oberhalb der Schälwalzen um ein- und auslaufseitige Kettenräder umlaufenden Endlosketten angeordnet sind. Wenn die Kettengeschwindigkeiten regelbar sind, läßt sich die Verweil und Schälzeit des Aufgabeguts auch auf diese Weise verändern. Es empfiehlt sich, daß ein einen Vorhang bildendes Blech schwenkbeweglich ist und damit ausweichen kann, z.B. wenn es beim Transport auf unnachgiebige Hindernisse trifft. Außerdem wird das Umlenken der Ketten beim Erreichen der Kettenräder erleichtert.

Wenn das Maschinengehäuse schwenkbar auf einem Grundrahmen lagert, läßt sich die Schräglage der Walzengruppe mittelbar, durch einfaches Verschwenken des gesamten Gehäuses um eine Längskante erreichen. Alternativ können die Walzengruppe oder die Schälwalzen verschwenkbar im Gehäuse angeordnet sein. In diesem Fall läßt sich die Schräglage durch unmittelbares Verstellen der Walzen erreichen. Es empfiehlt sich, die Schräglage und/oder die Neigung der Schälwalzen über Stellspindeln einzustellen. Die an einem Rahmen der Walzengruppe oder dem Gehäuse angreifenden Stellspindeln lassen sich beispielsweise manuell mittels eines Handrades oder motorisch verstellen, d.h. vertikal mehr oder weniger weit aus einer Spindelmutter herausbewegen, wodurch die Walzengruppe entsprechend entweder abgesenkt oder angehoben wird; alternativ lassen sich hydraulische oder pneumatische Stellzylinder einsetzen, deren an die Walzengruppe angreifende Kolben als Stellspindeln wirken.

Wenn im Maschinengehäuse oberhalb der Schälwalzen quer zu deren Längsachsen mindestens ein Vorhang angeordnet ist, läßt sich der Materialfluß in Transportrichtung abbremsen und damit verhindern, daß das Schälgut zu schnell zum Auslaufende gelangt. Ein vorteilhaft mit einer Schwenkachse versehener Vorhang kann beispielsweise aufs Gummi, z.B. in Form eines Hartgummilappens, vorzugsweise jedoch aus zahlreichen Einzelstäben bestehen. Hierbei bilden insbesondere Einzelstäbe, vorzugsweise Rundstäbe, oder einzelne Kettenstränge einen gardinenartigen Vorhang.

Über die etwa drei Meter langen Schälwalzen lassen sich mehrere, beispielsweise drei bis sechs Vorhänge verteilen.

Bei einem Vorhang, der mit einem Tariergewicht versehen ist, läßt sich die Bremsintensität des vorzugsweise an seinem den Schälwalzen zugewandten Ende in Transportrichtung abgewinkelten Vorhanges verändern, denn, je nach Position des verstellbaren Tariergewichtes läßt sich aufgrund der damit möglichen Schwerpunktverlagerung ein den Transportfluß mehr oder weniger stark hemmendes Zurückschwingen des ca. 1 cm oberhalb der Schälwalzen endenden Vorhanges um die Schwenkachse erreichen.

Gemäß einer Ausgestaltung der Erfindung läßt sich mittels in Transportrichtung mit Abstand aufeinanderfolgender, als Vorhänge dienender Bleche das Innere des Maschinengehäuses in Kammern unterteilen. Das Aufgabegut muß somit auf seinem Weg zum Auslaufende die Kammern sukzessive passieren, womit sich eine entsprechend der Kammerzahl erhöhte Bremswirkung und damit Verweilzeit des Schälgutes auf den Schälwalzen der Rollenschälmaschine ergibt. Das Aufgabegut verweilt umso länger in der Rollenschälmaschine, je mehr Vorhänge bzw. Kammern vorhanden sind.

Wenn die Vorhänge verstellbar sind, und zwar sowohl in ihrem Abstand zur Oberfläche der Schälwalzen als auch in Transportrichtung, lassen sich auch auf diese Weise die Transportgeschwindigkeit und damit die Verweilzeit des Aufgabegutes auf den Schälwalzen beeinflussen.

Die Erfindung wird nachfolgend anhand von in der Zeichnung dargestellten Ausführungsbeispielen näher erläutert. Es zeigen:

Fig. 1 eine Rollenschälmaschine, in der Vorderansicht;

Fig. 2 die Rollenschälmaschine gemäß Fig. 1, in der Draufsicht;

Fig. 3 die Rollenschälmaschine gemäß Fig. 1, von links gesehen;

Fig. 4 als Einzelheit eine in eine Schräglage verstellte, aus vier Schälwalzen bestehende Walzengruppe der Rollenschälmaschine gemäß Fig. 1, schematisch dargestellt;

Fig. 5 als Einzelheit die Schälwalzen der Rollenschälmaschine gemäß Fig. 1 mit oberhalb der Schälwalzen angeordneten, quer zu deren Längsachsen verschwenkbaren Vorhängen, schematisch dargestellt;

Fig. 6 als Einzelheit Schräglagen einer aus vier auf einer Bogenlinie angeordneten Schälwalzen bestehenden Walzengruppe einer Rollenschälmaschine, schematisch dargestellt; und

Fig. 7 eine Rollenschälmaschine mit oberhalb ihrer Schälwalzen umlaufenden, mit Vorhängen versehenen Endlosketten, in der Vorderansicht schematisch dargestellt.

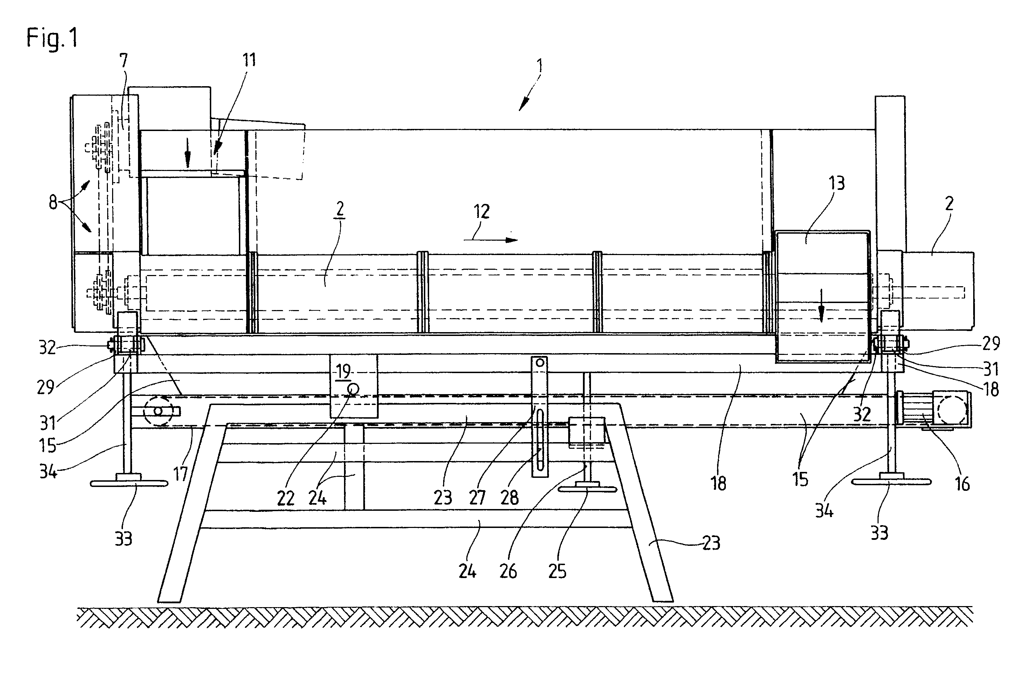

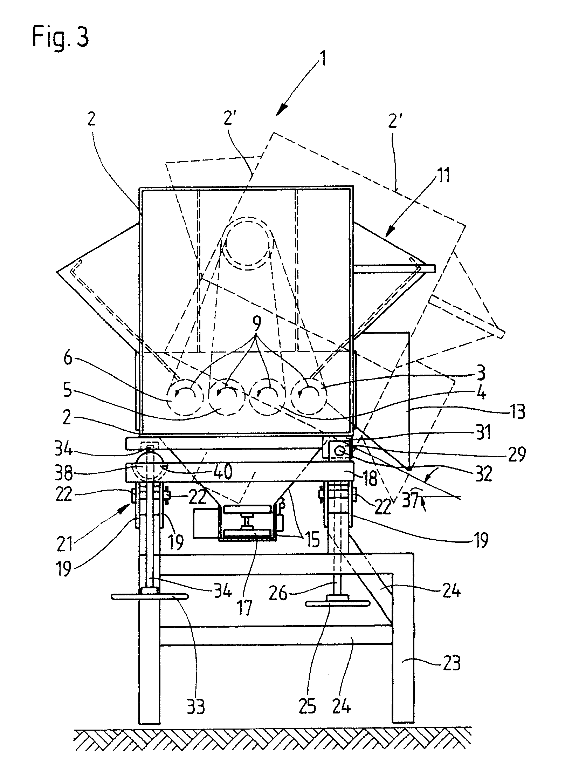

Die Rollenschälmaschine 1 besitzt in einem Gehäuse 2 vier Schälwalzen 3 bis 6, die von einem Motor 7 über einen zwischengeschalteten Riementrieb 8 (der Motor 7 und der Riementrieb 8 sind in Fig. 1 gestrichelt dargestellt) gleichsinnig und mit in Drehrichtung 9 (vgl. die Pfeile in Fig. 3) von Schälwalze zu Schälwalze zunehmender Umfangsgeschwindigkeit angetrieben werden; die in Fig. 3 rechte Schälwalze 3 besitzt somit eine geringere Umfangsgeschwindigkeit als die links benachbarte Schälwalze 4 und so weiter. Das Schälgut wird der Rollenschälmaschine am Einlauf 11 zugeführt, beispielsweise mittels eines nicht dargestellten Transportbandes.

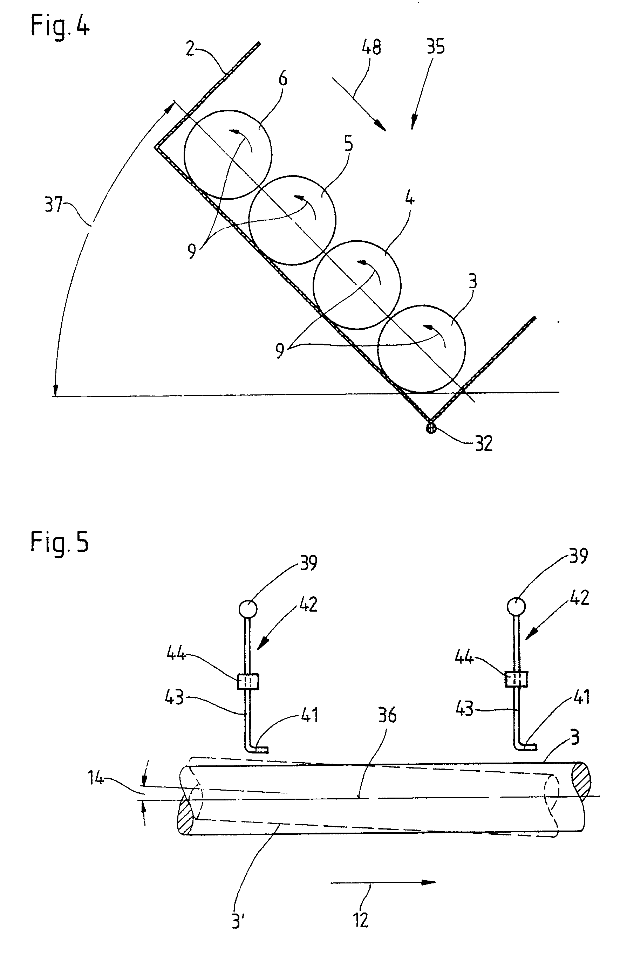

Zum Fördern des Aufgabegutes vom Einlauf 11 in Transportrichtung 12, d.h. in Walzenlängsrichtung, bis zum Auslauf 13 der Rollenschälmaschine 1 sind die Schälwalzen 3 bis 6 mit nicht dargestellten Profilen versehen und/oder in Transportrichtung 12 geneigt (vgl. in Fig. 5 die gestrichelt dargestellte Schälwalze 3′), so daß vom Einlauf 11 zum Auslauf 13 ein dem veränderbaren Neigungswinkel 14 (vgl. Fig. 5) entsprechendes Gefälle vorliegt. Während des Transportes werden die Schalen des Schälgutes durch aufgerauhte Oberflächen (Karborundbelag) der drehenden Schälwalzen 3 bis 6 abgerieben. Das geschälte Gut wird der Rollenschälmaschine 1 am Auslauf 13 entnommen; der Schälabfall gelangt hingegen in einen unterhalb der Schälwalzen 3 bis 6 angeordneten, mit dem Gehäuse 2 verbundenen Schalensammelkanal 15. Im Schalensammelkanal 15 läuft ein mittels eines Motors 16 angetriebener Austragförderer 17 endlos um und trägt - beispielsweise mit Kratzerblechen - die Schalenreste an einem Ende des Schalensammelkanals 15 aus, z.B. in einen nicht dargestellten Behälter.

Das Maschinengehäuse 2 samt Schalensammelkanal 15 lagert auf einem Rechteckrahmen 18; dieser stützt sich mit zwei aus Platten 19 zusammengesetzten Schwenkflanschen 21 auf Achsen 22 ab, die in mit einem Grundrahmen 23 der Rollenschälmaschine 1 verbundenen Stützträgern 24 angeordnet sind. Zum Verschwenken des Rechteckrahmens 18 um die Achsen 22 und damit Einstellen des Neigungswinkels 14 der im Maschinengehäuse 2 gelagerten Schälwalzen 3 bis 6 in ihre in Fig. 5 gestrichelt dargestellte, zum Auslauf geneigte Position 3′, greifen an den Längsträgern des Rechteckrahmens 18 höhenverstellbare, mittels Handrädern 25 zu verstellende Spindeln 26 an. An den Längsträgern des Rechteckrahmens 18 sind außerdem Verriegelungslaschen 27 angelenkt; diese sind mit einem Langloch 28 versehen und werden nach dem Einstellen des Neigungswinkels 14 mittels jeweils in das Langloch 28′ eingesetzten Schrauben im bzw. am Grundrahmen 23 festgelegt.

Endseitig des einen der beiden Längsträger und somit an den beiden entsprechenden Ecken des Rechteckrahmens 18 sind Stehlager 29 angeordnet, in die Lageraugen 31 des Maschinengehäuses 2 eingreifen; die Lageraugen 31 werden in den Stehlagern 29 durch Bolzen gesichert, die gleichzeitig als Schwenkachsen 32 für das an dieser Seite um seine Längskante verschwenkbare Maschinengehäuse 2 dienen. Zum Verschwenken des Maschinengehäuses 2 greifen an der den Stehlagern 29 gegenüberliegenden Längsseite durch den Rechteckrahmen 18 geschraubte, mittels Handrädern 33 zu verstellende Spindeln 34 an dem Maschinengehäuse 2 an. Beim Hochschrauben der Spindeln 34 aus ihrer in Fig. 3 dargestellten Ausgangslage wird das Maschinengehäuse 2 entlang seiner Längskante um seine Schwenkachsen 32 und damit die aus den Schälwalzen 3 bis 6 bestehende Walzengruppe 35 in einen dem Spindelweg entsprechende, beliebig einzustellende Schräglage 37 (vgl. Fig. 4) verschwenkt; in Fig. 3 ist das um seine Längskante verschwenkte Maschinengehäuse 2 gestrichelt und mit 2′ beziffert dargestellt. Die Spindeln 34 durchdringen Rollenblöcke 38 aus Kunststoff, die in halbschalenartigen Ausnehmungen 40 des Rechteckrahmens 18 drehbeweglich angeordnet sind und ein selbsttätiges Anpassen der Spindelstellung entsprechend der sich verändernden Schräglage 37 des Maschinengehäuses 2 erlauben.

Die Schräglage 37 der Walzengruppe 35 ermöglicht es, die Rollenschälmaschine 1 an unterschiedliches Schälgut variabel anzupassen und die Verweilzeit des Schälgutes auf den Schälwalzen 3 bis 6 der Rollenschälmaschine zu verändern; denn die gemäß Fig. 4 gleichsinnig in Drehrichtung 9, im dargestellten Beispiel nach links drehenden Schälwalzen 3 bis 6 transportieren das Schälgut entsprechend ihrer Drehrichtung zu der in der Schräglage 37 obersten Schälwalze 6 der Walzengruppe 35 und häufen das Schälgut dort an. Aufgrund der Schräglage 37, und je nach Schrägwinkel mehr oder weniger stark, tendiert das Schälgut in Pfeilrichtung 48, d.h. entgegen der Drehrichtung 9 der Schälwalzen 3 bis 6 nach unten und verteilt sich somit gleichmäßig auf alle Schälwalzen 3 bis 6. Je nach Beschaffenheit und Konfiguration des Schälgutes sowie der gewünschten Schälqualität, kann somit durch Verändern der Schräglage 37 die Verweilzeit des Schälgutes in der Rollenschälmaschine 1 bzw. auf den Schälwalzen 3 bis 6 variiert werden.

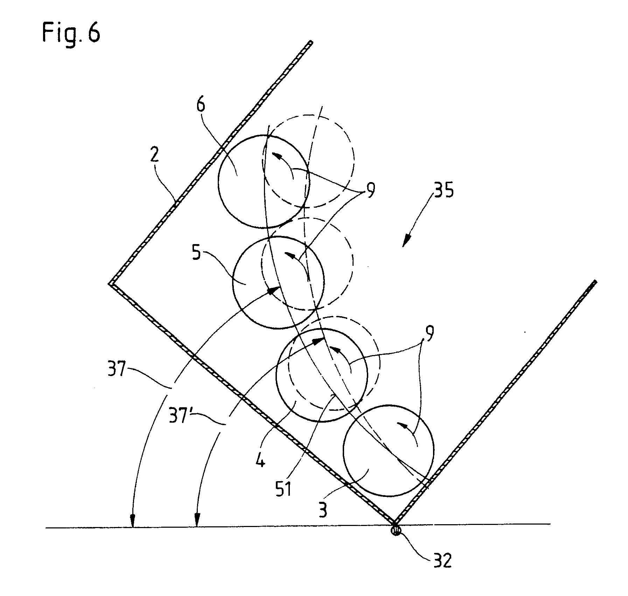

Bei der in Fig. 6 dargestellten Ausführung sind die die Walzengruppe 35 bildenden Schälwalzen 3 bis 6 auf einer Bogenlinie 51 angeordnet. Beim Verstellen des Maschinengehäuses 2 um die Schwenkachsen 32 werden auch bei dieser Anordnung unterschiedliche Schräglagen 37 bzw. 37′ (vgl. die gestrichelte Lage der Schälwalzen) erreicht.

Oberhalb der Schälwalzen 3 bis 6 sind quer zu deren Längsachsen 36 - wie in Fig. 5 dargestellt - mit Abstand voneinander mehrere Schwenkachsen 39 für daran befestigte, mit ihren den Schälwalzen 3 bis 6 zugewandten Enden 41 in Transportrichtung 12 abgewinkelte Vorhänge 42 angeordnet. Die Vorhänge 42 gemäß Fig. 5 bestehen aus mehreren, zylindrischen Einzelstäben 43, die mit vertikal verschiebbaren Tariergewichten 44 versehen sind. Je nachdem, in welcher Entfernung von den Vorhangenden 41 die Tariergewichte 44 auf den Stäben 43 arretiert werden, ergibt sich ein mehr oder weniger leichtes Verschwenken der Vorhänge 42 um ihre Schwenkachsen 39, d.h. dem sich in Transportrichtung 12 fortbewegenden Schälgut wird ein entsprechend größerer oder geringerer Widerstand entgegengesetzt.

Auch auf diese Weise läßt sich die Verweilzeit des Schälgutes auf den Schälwalzen 3 bis 6 in der Rollenschälmaschine 1 beeinflussen, denn die Vorhänge 42 üben einen Gegendruck und damit eine Bremswirkung auf das nachrutschende, sich zum Auslauf 13 hinbewegende Schälgut aus.

Die Schwenkachsen 39 sind sowohl in als auch vertikal zur Transportrichtung 12 verstellbar im Maschinengehäuse 2 der Rollenschälmaschine 1 angeordnet. Damit können sowohl die Abstände der Vorhangenden 41 von den Oberflächen der Schälwalzen 3 bis 6 als auch die Abstände zwischen den Vorhängen 42 verändert und die Durchlaufgeschwindigkeit des Schälgutes in der Rollenschälmaschine 1 entsprechend beeinflußt werden.

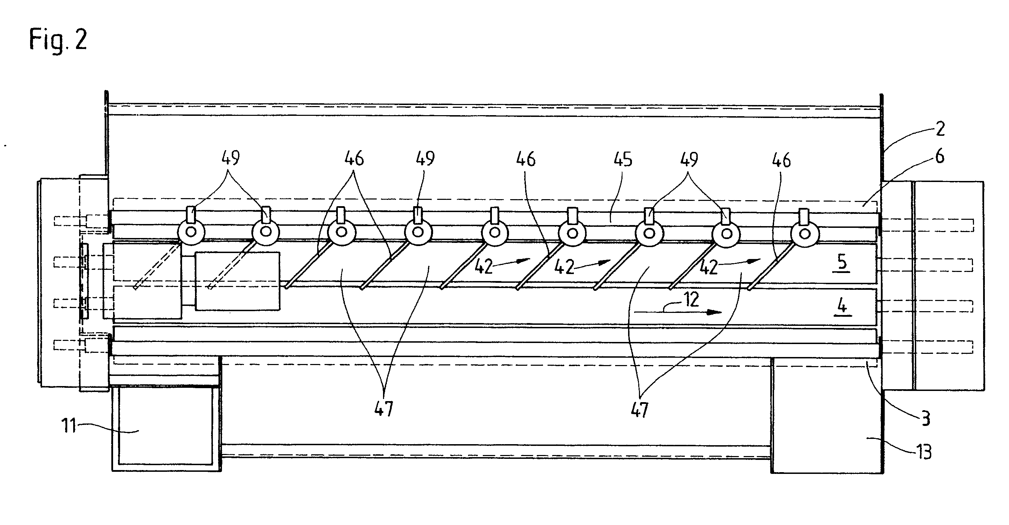

Bei der in Fig. 2 dargestellten Ausführung sind oberhalb der Schälwalzen 3 bis 6 an einem Rechteckstab (Rohr) 45 mittels Klemmen 49 mehrere aus Blechen 46 bestehende Vorhänge 42 aufgehängt. Jeweils zwei benachbarte Bleche 46, die während des Schälbetriebes ihre zuvor eingestellte Lage nicht ändern, bilden eine Kammer 47. Das am Einlauf 11 aufgegebene Schälgut wird während des Schälbetriebes in Förderrichtung 12 allmählich von Kammer zu Kammer befördert, bis es letztendlich am Auslauf entnommen wird. Das Schälgut passiert die Kammern 47 aufgrund der Schräglage 37 sowie der gleichen Drehrichtung 9 der Schälwalzen 3 bis 6 und des von der in Drehrichtung 9 obersten Schälwalze 6 in Pfeilrichtung 48 abrutschenden Schälgutes in einer von der am langsamsten zu der am schnellsten drehenden Schälwalze verlaufenden wellenförmigen Transportbewegung, wobei die Anzahl der Bleche 46 und damit Kammern 47 die Transportgeschwindigkeit maßgeblich bestimmt.

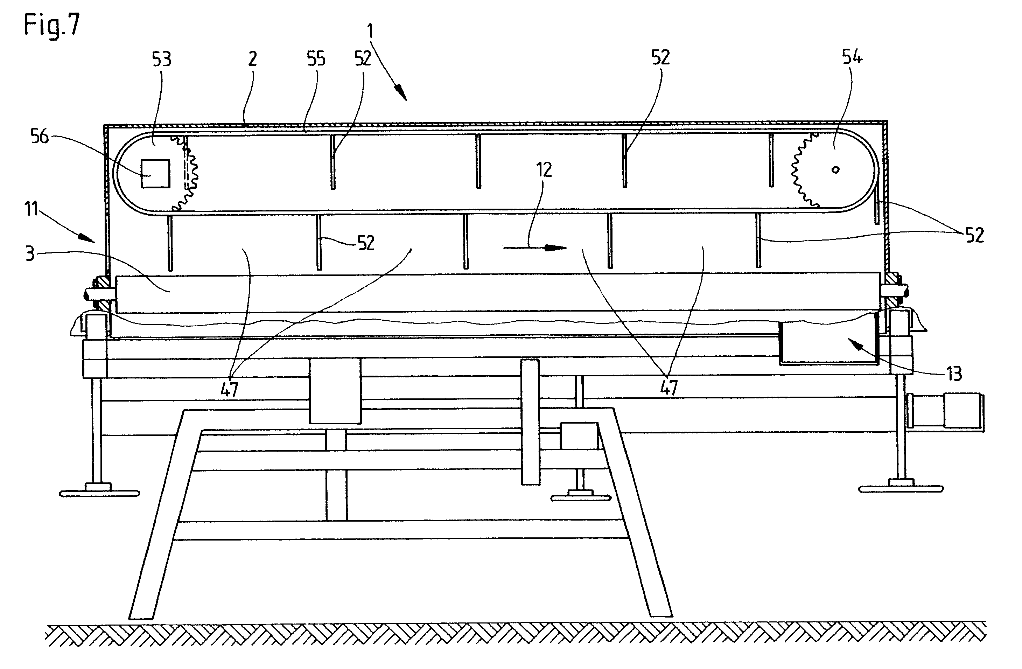

Die Rollenschälmaschine 1 gemäß Fig. 7 besitzt zwei oberhalb der Schälwalzen 3 bis 6 um ein- und auslaufseitige Kettenräder 53, 54 umlaufende, mit Abstand voneinander angeordnete Endlosketten 55, von denen lediglich eine dargestellt ist. An den Ketten 55 sind als Vorhänge dienende, sich quer über die Schälwalzen 3 bis 6 erstreckende, die Entfernung zwischen den beiden Ketten 55 überbrückende Bleche 52 schwenkbeweglich befestigt, z.B. mittels Scharnieren - nicht dargestellt - aufgehängt. Durch die Aufhängung der Bleche 52 an den Ketten 55 ergeben sich mit der Geschwindigkeit der Ketten 55 in Transportrichtung 12 mitwandernde, das während, des Transportes über die Schälwalzen 3 bis 6 zwischen den Blechen 52 eingeschlossene Aufgabegut vom Ein-bis zum Auslauf 11, 13 der Rollenschälmaschine 1 mitnehmende Kammern 47; jede Kammer 47 wird somit von zwei mit den Ketten 55 umlaufenden Blechen 52 und den Längswänden des Gehäuses 2 begrenzt. Ein das Kettenrad 53 antreibender, schematisch als black box dargestellter Antrieb 56 ist geschwindigkeitsregelbar und ermöglicht es somit, die Verweil- und Schälzeiten des Aufgabegutes in der Rollenschälmaschine 1 durch Verändern der Kettengeschwindigkeit zu beeinflussen. Die schwenkbewegliche, scharnierartige Aufhängung der Bleche 52 ermöglicht einen ungestörten Kettenumlauf insbesondere in den Umlenkpunkten, d.h. bei Erreichen der Kettenräder 53, 54, da den Blechen 52 - im Gegensatz zu einer starren Aufhängung - bei Behinderungen (z.B. Kettenradwelle) Ausweichbewegungen möglich sind.

Mit der vorbeschriebenen, in eine Schräglage 37 zu verstellende Schälwalzen 3 bis 6 aufweisenden Rollenschälmaschine 1 läßt sich aufgrund ausschließlich mechanischer Einstellmaßnahmen die Verweilzeit des Schälgutes auf den Schälwalzen 3 bis 6 beliebig variieren und somit an unterschiedliches Schälgut anpassen.

## Ansprüche

1. Rollen- oder Walzenschälmaschine zum mechanischen Schälen von Erd- oder Baumfrüchten mit mindestens einer angetriebenen Schälwalze, dadurch gekennzeichnet , daß die Schälwalzen (3 bis 6) einzeln oder gruppenweise quer zu ihren Längsachsen (36) in eine Schräglage (37) verschwenkbar sind.

2. Rollenschälmaschine nach Anspruch 1, gekennzeichnet durch eine vier Schälwalzen (3 bis 6) umfassende Walzengruppe (35).

3. Rollenschälmaschine nach Anspruch 1 oder 2, dadurch gekennzeichnet , daß die Schälwalzen (3 bis 6) nebeneinanderliegend auf einer Geraden angeordnet sind.

4. Rollenschälmaschine nach einem oder mehreren der Ansprüche 1 bis 3, gekennzeichnet durch Schälwalzen (3 bis 6) mit einem in Längsrichtung einstellbaren Neigungswinkel (14).

5. Rollenschälmaschine nach einem oder mehreren der Ansprüche 1 oder 2 und 4, dadurch gekennzeichnet , daß die Schälwalzen (3 bis 6) auf einer Bogenlinie angeordnet sind.

6. Rollenschälmaschine nach einem oder mehreren der Ansprüche 1 bis 5, dadurch gekennzeichnet , daß die Schälwalzen (3 bis 6) gleichsinnig umlaufen und in Drehrichtung (9) die Umfangsgeschwindigkeit von Schälwalze zu Schälwalze zunimmt.

7. Rollenschälmaschine nach einem oder mehreren der Ansprüche 1 bis 6, gekennzeichnet durch Umfangsgeschwindigkeiten der Schälwalzen (3 bis 6), die Schalenreste von den Walzenoberflächen abschleudernde Zentrifugalkräfte bewirken.

8. Rollenschälmaschine nach einem oder mehreren der Ansprüche 1 bis 7, dadurch gekennzeichnet , daß das Maschinengehäuse (2) gegenüber seinem Grundrahmen (23) schwenkbar ist.

9. Rollenschälmaschine nach einem oder mehreren der Ansprüche 1 bis 7, dadurch gekennzeichnet , daß die Walzengruppe (35) oder die Schälwalzen (3 bis 6) verschwenkbar im Maschinengehäuse (2) angeordnet sind.

10. Rollenschälmaschine nach einem oder mehreren der Ansprüche 1 bis 9, dadurch gekennzeichnet , daß die Schräglage (37) und/oder die Neigung (14) der Schälwalzen (3 bis 6) über Stellspindeln (26, 34) einzustellen sind bzw. ist.

11. Rollenschälmaschine nach einem oder mehreren der Ansprüche 1 bis 10, gekennzeichnet durch mindestens einen im Maschinengehäuse (2) oberhalb der Schälwalzen (3 bis 6) quer zu deren Längsachsen (36) angeordneten Vorhang (42).

12. Rollenschälmaschine nach Anspruch 11, dadurch gekennzeichnet , daß der Vorhang (42) um eine Achse (39) zu schwenken ist.

13. Rollenschälmaschine nach Anspruch 11 oder 12, gekennzeichnet durch , einen aus mehreren Einzelstäben (43) bestehenden Vorhang (42).

14. Rollenschälmaschine nach einem oder mehreren der Ansprüche 11 bis 13, dadurch gekennzeichnet , daß der Vorhang (42) mit zumindest einem Tariergewicht (44) versehen ist.

15. Rollenschälmaschine nach einem oder mehreren der Ansprüche 11 bis 14, dadurch gekennzeichnet , daß das den Schälwalzen (3 bis 6) zugewandte Vorhangende (41) in Transportrichtung (12) abwinkelt ist.

16. Rollenschälmaschine nach einem oder mehreren der Ansprüche 1 bis 11, dadurch gekennzeichnet , daß in Transportrichtung (12) mit Abstand aufeinanderfolgende Bleche (46) das Innere des Maschinengehäuses (2) in Kammern (47) unterteilen.

17. Rollenschälmaschine nach einem oder mehreren der Ansprüche 11 bis 16, dadurch gekennzeichnet , daß die Vorhänge (42) in und/oder vertikal zur Transportrichtung (12) lageverstellbar sind.

18. Rollenschälmaschine nach einem oder mehreren der Ansprüche 11 bis 17, dadurch gekennzeichnet , daß die Vorhänge (42; 46; 52) an oberhalb der Schälwalzen (3 bis 6) um ein- und auslaufseitige Kettenräder (53, 54) umlaufenden Endlosketten (55) angeordnet sind.

19. Rollenschälmaschine nach Anspruch 18, gekennzeichnet durch einen geschwindigkeitsregelbaren Kettenantrieb (56).

20. Rollenschälmaschine nach Anspruch 18 oder 19, dadurch gekennzeichnet , daß jeder Vorhang aus einem Blech (52) besteht, das schwenkbeweglich gelagert ist.

Fig.1

EP 0 422 627 A1

Fig. 2

EP 0 422 627 A1

## Fig. 3

Fig. 4

Fig. 5

Fig. 6

Fig.7

EP 0 422 627 A1

Europäisches
Patentamt

Nummer der Anmeldung

**EUROPÄISCHER
RECHERCHENBERICHT**

**EP 90 11 9458**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | US-A-4 325 297   (LOWELL)<br>* Spalte 2, Zeile 40 - Spalte 6, Zeile 4 *<br>– – – | 1-10,11,<br>12,16-19 | A 23 N 7/02 |
| X | BE-A-5 331 61   (MACHINEFABRIEK "ELLERT")<br>* das ganze Dokument *<br>– – – | 1-3,5,8,<br>10 | |
| X | FR-A-1 173 839   (LORIOT)<br>* Seite 1; Figuren 1-9 *<br>– – – | 1,2,4,5,9,<br>10,11 | |
| Y | US-A-4 509 414   (CHIU ET AL.)<br>* Spalte 3, Zeile 14 - Spalte 4, Zeile 2 *<br>– – – | 11,16-19 | |
| Y | US-A-2 316 368   (SELLS)<br>* Seite 1, Spalte 2, Zeile 9 - Seite 3, Spalte 2, Zeile 7;<br>Figuren 1-9 *<br>– – – | 11,12,16,<br>17 | |
| A | EP-A-0 322 252   (ENGELHOLM)<br>* Anspruch 1 *<br>– – – | 7 | |
| A | US-A-4 827 836   (NEIDIGH)<br>* Spalte 1, Zeile 52 - Spalte 2, Zeile 66; Figuren 1-4 *<br>– – – | 1,5 | RECHERCHIERTE<br>SACHGEBIETE (Int. Cl.5) |
| A | US-A-2 477 006   (PIERSON)<br>– – – – | | A 23 N |

Der vorliegende Recherchenbericht wurde für alle Patentansprüche erstellt

| Recherchenort | Abschlußdatum der Recherche | Prüfer |
|---|---|---|
| Den Haag | 21 Dezember 90 | VAN OORSCHOT J.W.M. |